(19) Europäisches Patentamt
European Patent Office
Office européen des brevets

(11) **EP 1 169 394 B1**

(12) # EUROPÄISCHE PATENTSCHRIFT

(45) Veröffentlichungstag und Bekanntmachung des Hinweises auf die Patenterteilung:
**02.06.2004 Patentblatt 2004/23**

(21) Anmeldenummer: **00920511.3**

(22) Anmeldetag: **17.03.2000**

(51) Int Cl.[7]: **C09D 5/02**, C09D 7/14

(86) Internationale Anmeldenummer:
**PCT/EP2000/002386**

(87) Internationale Veröffentlichungsnummer:
**WO 2000/060015 (12.10.2000 Gazette 2000/41)**

(54) **ANSTRICHMITTEL- UND BESCHICHTUNGSMITTELSYSTEME**
LACQUERS AND PAINTS AND COATING MATERIAL SYSTEMS
SYSTEMES DE PRODUIT COUVRANT ET D'AGENT DE REVETEMENT

(84) Benannte Vertragsstaaten:
**AT BE CH CY DE DK ES FI FR GB GR IE IT LI LU MC NL PT SE**

(30) Priorität: **30.03.1999 DE 19914329**

(43) Veröffentlichungstag der Anmeldung:
**09.01.2002 Patentblatt 2002/02**

(73) Patentinhaber:
- **Bayer Chemicals AG**
  **51368 Leverkusen (DE)**
  Benannte Vertragsstaaten:
  **AT CH LI CY DE DK ES FI FR GB GR IE IT LU MC NL PT SE**
- **NYSSEN, Peter, Roger**
  **D-41542 Dormagen (DE)**
  Benannte Vertragsstaaten:
  **BE**

(72) Erfinder: **NYSSEN, Peter, Roger**
**D-41542 Dormagen (DE)**

(74) Vertreter: **Herbold, Matthias**
**Bayer Chemicals AG,**
**Law and Patents,**
**Patents and Licensing,**
**Building Q 18**
**51368 Leverkusen (DE)**

(56) Entgegenhaltungen:
**DE-A- 19 652 813**

- **CHEMICAL ABSTRACTS, vol. 105, no. 10, 10. September 1986 (1986-09-10) Columbus, Ohio, US; abstract no. 80718q, STOFFER JAMES: "ultrasonic dispersion of pigment in water-based paints" Seite 98; Spalte rechte; XP002143046 & PROC. WATER-BORNE HIGHER-SOLIDS COAT. SYMP., Bd. 13, 1986, Seiten 410-431,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Anstrichmittel- und Beschichtungsmittelsysteme sowie ihre Verwendung zur Herstellung von Anstrich- und Beschichtungsmittel.

Auf dem Gebiet der pigmentierten flüssigen Anstrich- und Beschichtungsmittel ist insbesondere die Verwendung von wäßrigen oder lösemittelhaltigen Dispersionen von Pigmenten bzw. Füllstoffen und Bindemitteln bekannt. Als Pigmente bzw. Füllstoffe kommen beispielsweise anorganische und organische Farbpigmente, d.h. Weiß-, Schwarz- und Buntpigmente in Frage. Als Bindemittel werden anorganische sowie organische, im allgemeinen aber organische, netzwerkbildende bzw. filmbildende Polymere verwendet, die in einem Anstrichmittel gelöst, dispergiert oder emulgiert vorliegen können.

Pigmentierte Anstrich- und Beschichtungsmittel enthalten in der Regel weitere Additive und gegebenenfalls weitere Lösungsmittel.

Die Herstellung der pigmentierten wäßrigen Anstrich- und Beschichtungsmittel erfolgt im allgemeinen durch Dispergierung der Pigmente und Füllstoffe in Gegenwart von Wasser und gegebenenfalls weiteren Zusätzen. Die Dispergierung umfaßt die Desaggregation bzw. Desagglomeration der Pigment- bzw. Füllstoffteilchen, die herstellungsbedingt in ihrer trockenen Pulverform oder wäßrigen Preßkuchenform physikalisch stark aggregiert sind sowie die physikalische Stabilisierung der so fein verteilten Pigmente oder Füllstoffe mittels geeigneter Additive wie z.B. Dispergiermittel, Emulgatoren oder Verdickungsmittel, um die gewünschten Eigenschaften der flüssigen Fertigprodukte (Farben) wie z.B. Lagerstabilität, Deckkraft und Weißgrad (Aufhellung), Farbstärke, Farbton und Brillanz etc. zu erzielen. Daher ist die Herstellung der wäßrigen Anstriche und Beschichtungsmittel immer mit dem hohen Energieeintrag verbunden, der technisch nur durch Einsatz von beispielsweise Naßzerkleinerungsmaschinen wie z.B. Dissolver, Attritor, Kugelmühlen, Rotor-Statormühlen, Rührwerksperlmühlen, Hochdruckhomogenisatoren und anderen mehr erfolgen kann.

Aus diesem Grund kann die Herstellung der Dispersionen nur im industriellen Maßstab erfolgen; und nur dort sind technische Aggregate wirtschaftlich einsetzbar und verfügbar. Dies hat in der Vergangenheit bis heute dazu geführt, daß Anstrich- und Beschichtungsmittel ausschließlich als fertig eingestellte Flüssigpräparation am Markt erhältlich sind. Dies gilt sowohl für den industriellen als auch für den verbrauchemahen Einsatz.

Den Vorteilen der einfachen Handhabung der so auf die jeweilige Verwendung abgestimmten flüssigen Präparationen stehen jedoch erhebliche Nachteile gegenüber. So ist das relativ große Volumen der Anstrich- und Beschichtungsmittel aufgrund enthaltenen Wassers und gegebenenfalls Lösungsmittel (in Summe bis zu 90 %; z.B. hochwertige Innenfarbe weiß 30 bis 50 Vol.-% Wasser) nachteilig, weil damit ein hoher Aufwand hinsichtlich Art und Größe der Verpackungsmittel (Weißblechdosen, Kunststoffeimer und Hobbocks) sowie hoher Lagerhaltungs- und Transportaufwand verbunden ist.

Außerdem besitzen die wäßrigen Präparationen oft ungenügende Haltbarkeit und Lagerfähigkeit wegen:

- Schimmel- und Bakterienbefall, wodurch der Einsatz hoher Biozidmengen erforderlich wird;
- Sedimentation, Reagglomeration der Pigmente oder Füllstoffe oder Aufrahmung der flüssigen Phase, wodurch meist ein Aufrühren der Produkte vor dem Einsatz erforderlich ist;
- Antrocknung und Eintrocknung der Produkte in und am Gebinde, womit immer merkliche Qualitätseinbußen der Produkte verbunden sind, wie z.B. Stippenbildung im Anstrich oder in der Beschichtung.

Oft wird ein hoher Gehalt an Mitteln zur Verbesserung des Gefrierschutzes und des Eintrocknungsverhaltens wie z.B. Lösungsmittel, insbesondere Glykole, Polyglykole u.a.m. notwendig, die aber schon hinsichtlich der Produkteigenschaften wie z.B. der mikrobiologischen Haltbarkeit und der Klebrigkeit der Produkte nach Applikation schwerwiegende Nachteile mit sich bringen. Zudem fällt es heute zunehmend schwerer geeignete Konservierungsmittel für z.B. glykol- oder polyglykolhaltige wäßrige Präparationen zu finden, die der zunehmenden Adaption von Mikroorganismen begegnen können und ökologisch vertretbar sind.

Schwerwiegende ökologische Nachteile von Flüssigpräparationen betreffen insbesondere die Entsorgung von Restprodukten, Produktabfällen und Gebinden in allen Ebenen des Produktlebenszykluses. Dies gilt für den Herstellungsprozeß der wäßrigen Präparationen, die Lagerung und Abfüllung, den Handel, die Lagerung und Anwendung in Haushalten und Industrie sowie im Fachbetrieb. So kann man leicht abschätzen, daß allein in privaten Haushalten die Menge an Restprodukten und Produktabfällen aus wäßrigen Anstrichmitteln sehr groß ist. Deren Entsorgung ist bekanntermaßen teuer. Aufgabe der vorliegenden Erfindung ist daher die Bereitstellung eines Anstrichmittel- und Beschichtungsmittelsystems, mit dem die obigen Nachteile weitgehend vermieden werden können.

Es wurde nun ein Anstrichmittel- und Beschichtungsmittelsystem gefunden, enthaltend

a) wenigstens eine Feststoffkomponente, enthaltend wenigstens ein anorganisches oder organisches Weiß-, Schwarz- oder Buntpigment, anorganische oder organische Füllstoffe oder Mischungen davon und
b) wenigstens eine Bindemittelkomponente,

dadurch gekennzeichnet, daß die Komponenten des Systems in Wasser mit einem spezifischen Energieeintrag von weniger als 150 J/cm$^3$, bezogen auf die Summe der Volumina der Komponenten und Wasser, eine wäßrige Dispersion mit einer Körnigkeit von <60 µm, vorzugsweise weniger als 40 µm, ergeben (bestimmt nach ISO 1524: 1983).

Der spezifische Energieeintrag $\mathbf{E_v}$ sei durch folgende Formel beschrieben:

$$E_v = N^*t/V_s$$

mit

N [W]: mittels Rührer eingebrachte, insbesondere elektrische Leistung
t [s]: Dispergierzeit bzw. Dauer des Energieeintrags
$V_S$ [cm$^3$]: Gesamtvolumen der Summe aller Komponenten

Je niedriger der Zahlenwert $\mathbf{E_v}$ [J/cm$^3$] zur Erzielung der gewünschten Eigenschaften der Anstrich- und Beschichtungsmittel wie z.B. Deckkraft, Farbstärke etc. ist, desto leichter sind die Feststoffe der Komponente a) in dem System dispergierbar.

Das erfindungsgemäße System ist insbesondere dadurch gekennzeichnet, daß im Vergleich zum Stand der Technik in der Herstellung von Anstrich- und Beschichtungsmitteln der spezifische Energieeintrag wesentlich geringer ist, um die in den Feststoffkomponente a) enthaltenen Pigmente und Füllstoffe vollständig in Wasser zu dispergieren. (Literatur zum Stand der Technik z.B. Juan m. Oyarzün, Pigmentverarbeitung, Handbuch der physikalisch-chemischen Grundlagen, Verlag Vincentz, 1998).

**<u>Feststoffkomnonente a)</u>**

Die Feststoffkomponente a) besitzt in ihrer Form keine Einschränkung, insbesondere kommen jedoch Pulver, Granulate, Schülpen oder Pellets in Frage.

Als Pigmente und Füllstoffe kommen die nach dem Stand der Technik bekannten in Frage wie z.B. zu entnehmen aus: Lückert, Pigment + Füllstoff Tabellen, 5. Auflage, Laatzen, 1994.

Als anorganische Weißpigmente sind insbesondere zu nennen Oxide, wie z.B. Titandioxid, Zinkoxid (ZnO, Zinkweiß), Zirkonoxid, Carbonate wie z.B. Bleiweiß, Sulfate, wie z.B. Bleisulfat, und Sulfide wie z.B. Zinksulfid, und Lithopone; besonders bevorzugt ist Titandioxid.

Als anorganische Buntpigmente sind zu nennen die aus der Gruppe der Oxide und Hydroxide in Form ihrer anorganischen Einzelverbindungen oder Mischphasen, insbesondere Eisenoxidpigmente, Chromoxidpigmente und oxidische Mischphasenpigmente mit Rutil- oder Spinellstruktur, sowie Bismutvanadat-, Cadmium-, Cersulfid-, Chromat-, Ultramarin- und Eisenblaupigmente.

Beispiele von Eisenoxidpigmenten sind Pigmente von Color Index Pigment Yellow 42, Pigment Red 101, Pigment Blue 11, Pigment Brown 6 sowie transparente Eisenoxidpigmente.
Beispiele von Chromoxidpigmenten sind Pigmente von Color Index Pigment Green 17 und Pigment Green 18.
Beispiele oxidischer Mischphasenpigmente sind Nickeltitan- und Chromtitangelb, Cobaltgrün und -blau, Zinkeisen- und Chromeisenbraun sowie Eisenmanganschwarz und Spinellschwarz.

Bevorzugte organische Pigmente sind z.B. solche der Monoazo-, Disazo-, verlackte Azo-, β-Naphthol-, Naphthol AS-, Benzimidazolon-, Disazokondensations-, Azometallkomplex-, Isoindolin- und Isoindolinon-Reihe, ferner polycyclische Pigmente wie z.B. aus der Phthalocyanin-, Chinacridon-, Perylen-, Perinon-, Thioindigo-, Anthrachinon-, Dioxazin-, Chinophthalon- und Diketopyrrolopyrrol-Reihe. Außerdem verlackte Farbstoffe wie Ca-, Mg- und Al-Lacke von sulfonsäure- oder carbonsäuregruppenhaltigen Farbstoffen, sowie auch Ruße, die im Rahmen dieser Anmeldung als Pigmente verstanden werden und von denen eine große Zahl beispielsweise aus Colour Index, 2. Auflage, bekannt sind. Insbesondere zu nennen sind saure bis alkalische Ruße nach dem Furnacerußverfahren sowie chemisch oberflächenmodifizierte Ruße, beispielsweise sulfo- oder carboxylgruppenhaltige Ruße.

Als anorganische Schwarzpigmente sind beispielsweise solche zu nennen, wie sie bereits oben zusammen mit den anorganischen Buntpigmenten beschrieben werden, insbesondere Eisenoxidschwarz, Spinellschwarz sowie schwarze oxidische Mischphasenpigmente.

Als Füllstoffe seien insbesondere von den genannten Pigmenten verschiedene, vornehmlich helle und gegenüber dem Bindemittel der Komponente b) inerte Substanzen verstanden. Besonders bevorzugt zeichnen sich die

Füllstoffe durch eine gegenüber den vorgenannten Weißpigmenten niedrigere optische Brechungszahl aus.

Als Beispiele anorganischer Füllstoffe seien genannt Carbonate, wie z.B. Kreide, Calcit oder Dolomit, Siliziumdioxid (Quarzmehl), natürliche oder synthetische Kieselsäuren, Silicate, wie z.B. Talkum, Kaolin oder Glimmer, und Sulfate wie z.B. Schwerspat oder Bariumsulfat (Blanc fix).

Als organische Füllstoffe sind beispielsweise polymere Pulver und sogenannte Hollow Spheres zu nennen.

Die Feststoffkomponente a) kann außerdem andere Pigmente enthalten, insbesondere Glanzpigmente wie Perlglanz-, Metalleffekt- oder Interferenzpigmente sowie "funktionelle Pigmente", insbesondere Korrosionsschutzpigmente wie z.B. Blei-, Chromatoder phosphat-haltige oder metallische Korrosionsschutzpigmente und leitfähige Pigmente wie z.B. leitfähige Ruße oder mit Sb dotierte $SnO_2$ beschichtete Glimmerpigmente.

Als Additive kann die Feststoffkomponente a) gegebenenfalls grenzflächenaktive Mittel, Verdickungsmittel, Thixotropiermittel, Entschäumer und beispielsweise Schaumverhinderungsmittel und Hilfsmittel zur Enthärtung des Wassers enthalten. Für die grenzflächenaktiven Mittel besteht erfindungsgemäß keine Notwendigkeit der Einschränkung hinsichtlich der Auswahl geeigneter Verbindungen. Sie werden bevorzugt zur physikalischen Stabilisierung der feinteiligen Pigment- und Füllstoffteilchen während der Herstellung der Feststoffkomponente a) bzw. in den fertigen Anstrich- und Beschichtungsmitteln selbst eingesetzt. Als grenzflächenaktive Mittel werden vorzugsweise Dispergiermittel, Netzmittel und Emulgatoren eingesetzt wie sie vielfach in den handelsüblichen Anstrich- und Beschichtungsmitteln verwendet werden. Insbesondere können sie nicht-ionogen, anionogen, kationogen oder amphoter sein bzw. monomerer oder polymerer Natur sein.

Als bevorzugte Dispergiermittel sind solche der Komponente a1) bis a5) zu nennen:

a1) Oxalkylierungsprodukte, die durch Kondensation von phenolischen OHgruppenhaltigen Aromaten mit Formaldehyd und NH-funktionellen Gruppen erhältlich sind.

a2) Wasserlösliche, hydrophile Polyetherketten aufweisende Polyisocyanat-Additionsprodukte, die vorzugsweise einen Gehalt an Isocyanatgruppen von maximal 1,0 Gew.-% und einen Gehalt an über monofunktionelle Alkohole eingebauten, innerhalb von Polyetherketten angeordneten Ethylenoxideinheiten von 30 - 99,5 Gew.-% und einem Anteil an ionischen Gruppen von 0-200 Milliäquivalent/100 g Polyisocyanatadditionsprodukt enthalten;

Derartige Dispergiermittel sind beispielsweise in DE-A 1 963 382 offenbart.

a3) Wasserlösliche anorganische Salze, insbesondere Borate, Carbonate, Silikate, Sulfate, Sulfite, Selenate, Chloride, Fluoride, Phosphate, Nitrate und Aluminate der Alkali- und Erdalkalimetalle und anderer Metalle, sowie Ammonium;

Verbindungen aus der Gruppe der wasserlöslichen Salze werden vorzugsweise auf Basis anorganischer Pigmente oder Füllstoffe (Komp. a) eingesetzt. In diese Gruppe fallen Sulfate, Chloride, Fluoride, Nitrate, Carbonate, Silikate, Phosphate, Sulfite, Selenate, Aluminate, Borate der Alkali- und Erdalkalimetalle und anderer Metalle (z.B. Aluminium und Eisen) sowie von Ammonium.

Besonders bevorzugt ist Magnesiumsulfat.

a4) Polymere, aufgebaut aus wiederkehrenden Succinyl-Einheiten, insbesondere Polyasparaginsäure.

Zudem können als Dispergiermittel solche aus der Gruppe a5) eingesetzt werden. Diese sind nicht-ionisch, anionisch, kationisch oder amphotere Verbindungen.

Als nichtionische Dispergiermittel der Komponente a5) sind beispielsweise zu nennen: Alkoxylate, Alkylolamide, Ester, Aminoxide und Alkylpolyglykoside.

Als nichtionische Dispergiermittel der Komponente a5) kommen weiterhin in Frage: Umsetzungsprodukte von Alkylenoxiden mit alkylierbaren Verbindungen, wie z.B. Fettalkoholen, Fettaminen, Fettsäuren, Phenolen, Alkylphenolen, Carbonsäureamiden und Harzsäuren. Hierbei handelt es sich z.B. um Ethylenoxidaddukte aus der Klasse der Umsetzungsprodukte von Ethylenoxid mit:

a) gesättigten und/oder ungesättigten Fettalkoholen mit 6 bis 20 C-Atomen oder

b) Alkylphenolen mit 4 bis 12 C-Atomen im Alkylrest oder

c) gesättigten und/oder ungesättigten Fettaminen mit 14 bis 20 C-Atomen oder

d) gesättigten und/oder ungesättigten Fettsäuren mit 14 bis 20 C-Atomen oder

e) hydrierten und/oder unhydrierten Harzsäuren,

f) aus natürliche oder modifizierte, gegebenenfalls hydrierte Rizinusölfettkörper hergestellte Veresterungs- und/oder Arylierungsprodukte, die gegebenenfalls durch Veresterung mit Dicarbonsäuren zu wiederkehrenden Struktureinheiten verknüpft sind.

Besonders bevorzugt sind nichtionische polymere Dispergiermittel.

Als polymere Dispergiermittel können beispielsweise wasserlösliche sowie wasseremulgierbare Verbindungen in Frage, z.B. Homo- und Copolymerisate, P&opf- und Pfropfcopolymerisate sowie statistische Blockcopolymerisate.

Besonders bevorzugte polymere Dispergiermittel sind beispielsweise AB-, BAB- und ABC-Blockcopolymere. In den AB- oder BAB-Blockcopolymeren ist das A-Segment ein hydrophobes Homopolmyer oder Copolymer, das eine Verbindung zum Pigment sicherstellt und der B-Block ein hydrophiles Homopolymer oder Copolymer oder ein Salz davon und stellt das Dispergieren des Pigmentes im wäßrigen Medium sicher. Derartige polymere Dispergiermittel und deren Synthese sind beispielsweise aus EP-A-518 225 sowie EP-A-556 649 bekannt.

Weitere Beispiele geeigneter polymerer Dispergiermittel sind Polyethylenoxide, Polypropylenoxide, Polyoxymethylene, Polytrimethylenoxide, Polyvinylmethylether, Polyethylenimine, Polyacrylsäuren, Polyarylamide, Polymethacrylsäuren, Polymethacrylamide, Poly-N,N-dimethyl-acrylamide, Poly-N-isopropylacrylamide, Poly-N-acrylglycinamide, Poly-N-methacrylglycinamide, Polyvinyloxazolidone, Polyvinylmethyloxazolidone.

Als anionische Dispergiermittel sind beispielsweise zu nennen: Alkylsulfate, Ethersulfate, Ethercarboxylate, Phosphatester, Sulfosuccinatamide, Paraffinsulfonate, Olefinsulfonate, Sarcosinate, Isothionate und Taurate.

Besonders bevorzugt sind anionische, polymere Dispergiermittel.

Weiterhin kommen in Frage Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind.

Geeignet sind außerdem Dispergiermittel aus der Gruppe der Sulfobernsteinsäureester sowie Alkylbenzolsulfonate. Außerdem ionisch modifizierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene $C_6$-$C_{22}$-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die ionisch modifizierten alkoxylierten Fettsäurealkohole liegen vorzugsweise als Salz, insbesondere als Alkali oder Aminsalze, vorzugsweise als Diethylaminsalz vor. Unter ionische Modifizierung wird beispielsweise Sulfatierung, Carboxylierung oder Phosphatierung verstanden.

Weitere Beispiele für anionische, polymere Dispergiermittel sind die Salze der Polyacrylsäuren, Polyethylensulfonsäuren, Polystyrolsulfonsäure, Polymethacrylsäuren, Polyphosphorsäuren.

Zusätzliche Beispiele für anionische, polymere Dispergiermittel sind Copolymerisate acrylischer Monomeren, die beispielhaft in folgender Tabelle durch Kombination folgender Monomere angegeben sind, die zu statistischen, alternierenden oder Pfropfcopolymeren synthetisiert werden:

| | |
|---|---|
| Acrylamid, | Acrylsäure; |
| Acrylamid, | Acrylnitril; |
| Acrylsäure, | N-Acrylglycinamid; |
| Acrylsäure, | Ethylacrylat; |
| Acrylsäure, | Methylacrylat; |
| Acrylsäure, | Methylenbutyrolactam; |
| N-Acrylglycinamid, | N-Isopropylacrylamid; |
| Methacrylamid, | Methacrylsäure; |
| Methacrylsäure, | Benzylmethacrylat; |
| Methacrylsäure, | Diphenylmethylmethacrylat; |
| Methacrylsäure, | Methylmethacrylat; |
| Methacrylsäure, | Styrol; |

Weitere anionische, polymere Dispergiermittel sind Styrolmaleinsäureanhydrid-Copolymere, deren Copolymere mit den genannten acrylischen Monomeren, sowie Polymere auf Polyurethanbasis.

Weiterhin kommen ligninische Verbindung vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert,

oxidiert, propoxyliert, sulfoniert, sulfomethyliert oder disulfoniert und nach bekannten Verfahren fraktioniert werden, z. B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht von größer 1000 bis 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als kationische Dispergiermittel sind beispielsweise zu nennen: quarternäre Alkylammoniumverbindungen und Imidazole.

Besonders bevorzugt sind kationische, polymere Dispergiermittel.

Beispiele für kationische, polymere Dispergiermittel sind die Salze der Polyethylenimine, Polyvinylamine, Poly (2-vinylpyridine), Poly(4-vinylpyridine), Poly(diallyldimethylammonium)chlorid, Poly(4-vinylbenzyltrimethylammonium) salze, Poly(2-vinylpiperidin).

Als amphotere Dispergiermittel sind beispielsweise zu nennen: Betaine, Glycinate, Propionate und Imidazoline.

Anionische und kationische Polymere werden als Polyelektrolyte zusammengefaßt und sind in einer wäßrigen und/oder organischen Phase partiell oder vollständig dissoziierbar.

Als geeignete Verdickungsmittel kommen insbesondere organische, natürliche, teilsynthetische oder synthetische Verdickungsmittel in Frage.

Sie können eingesetzt werden zur Einstellung der Viskosität der Anstrichmittel- und Beschichtungsmittel sowie zur Stabilisierung und Viskositätseinstellung während des Herstellungsprozesses der Feststoffkomponente a). Eine Übersicht über die geeigneten Verdickungsmittel kann z.B. entnommen werden aus Römpp Lexikon, Lacke und Druckfarben, Ulrich Zorll, Thieme Verlag, Stuttgart, 1998. Als geeignete Verdickungsmittel sind solche aus der Gruppe der anionischen oder nicht-ionischen organischen wasserlöslichen Polymere zu nennen, die im weiteren Sinne auch als Schutzkolloide für die feinverteilten Pigmentteilchen in der Feststoffkomponente a) eingesetzt werden können. Sie dienen sowohl während der Herstellung derselben (insbesondere während der Trocknung) gegen Reaggregation sowie zur Verbesserung der Redispergierbarkeit und Verträglichkeit in den verschiedenen Bindemittelkomponenten b) zusammen mit Wasser. Besonders bevorzugt sind organische Verdickungsmittel, die vorzugsweise vollständig wasserdispergierbar oder -löslich sind.

Vorzugsweise wird als organisches Verdickungsmittel eine Verbindung eingesetzt, deren 4 %ige wäßrige Lösung bei 20°C eine Viskosität von ≥ 2 mPa.s aufweist.

Bevorzugte organische Verdickungsmittel sind Verbindungen, ausgewählt aus nachfolgenden Gruppen:

- Dextrine oder Cyclodextrine,
- Stärke und Stärkederivate, insbesondere abgebaute oder teilabgebaute Stärke,
- anionische Polyhydroxyverbindungen, insbesondere Xanthan oder Carboxymethylcellulose
- Cellulosederivate wie z.B. Methylcellulose und Hydroxyalkylcellulose insbesondere Hydroxymethyl-, Hydroxyethyl- oder Hydroxypropylcellulose,
- Polyacrylate, Polyetherpolyole oder Polyurethanderivate,
- partiell hydrolysierte Polymerisate von Vinylacetat, vorzugsweise Polyvinylalkohol, die zu mehr als 70 % hydrolysiert sind und/oder Vinylalkohol-Copolymcrisate, vorzugsweise Copolymere aus Vinylacetat und Alkylvinylester, die partiell oder vollständig verseift sind, sowie Polyinylalkohol selbst,
- Polymerisate von N-Vinylpyrrolidon, oder Copolymerisate mit Vinylestern.

Bevorzugt kommen als Verdickungsmittel Stärke, derivatisierte Stärke und insbesondere abgebaute Stärke in Frage.

Abgebaute Stärke wird beispielsweise erhalten, indem man z.B. native Kartoffel-, Weizen, Mais-, Reis- oder Tapiokastärke einem oxidativen, thermischen, enzymatischen oder hydrolytischen Abbau unterwirft. Bevorzugt sind hierbei oxidativ abgebaute Stärken, besonders bevorzugt ist mit Hypochlrorit oxidativ abgebaute Kartoffelstärke.

Weiterhin kommen insbesondere Dextrine und Cyclodextrine in Frage. Als Dextrine werden vorzugsweise Weißdextrine, Gelbdextrine sowie Maltodextrine mit einer Kaltwasserlöslichkeit von größer 50 Gew.-%, vorzugsweise größer 90 %, gemessen bei 10 g auf 200 ml Wasser bei 20°C, verstanden.

Bevorzugte Cyclodextrine sind solche vom Typ $\alpha$-CD mit 6 Glucopyranose-Einheiten, $\beta$-CD mit 7 Glucopyranose-Einheiten und $\gamma$-CD mit 8 Glucopyranose-Einheiten sowie verzweigte AB, AC, AD-Diclosyl-CD und Mischungen

der genannten Dextrine.

Als bevorzugte anionische Polyhydroxyverbindungen kommen Polysaccharide, insbesondere Xanthan sowie Carboxymethylcellulose in Frage.

Als Cellulosederivate können als Verdickungsmittel bevorzugt Methylcellulose, Hydroxymethylcellulose, Hydroxyethyl- und -propylcellulose eingesetzt werden.

Insbesondere kommen als Verdickungsmittel wenigstens partiell hydrolysierte (verseifte) Polymerisate und Copolymerisate von Vinylacetat, welche in Wasser vollständig dispergierbar, vorzugsweise vollständig löslich sind, in Frage. Bevorzugt sind hydrolysierte Polymerisate und Copolymerisate von Vinylacetat mit einem Hydrolysegrad von 70 bis 97 %, vorzugsweise von 80 bis 92 %, einem Molekulargewicht von 1 000 bis 150.000, vorzugsweise 2000 bis 100 000 g/mol sowie einer Auslaufviskosität (bestimmt an einer 4 %igen wäßrigen Lösung bei 20°C) von 2 bis 35 mPa.s, vorzugsweise 2 bis 10 mPa.s.

Besonders bevorzugt sind partiell hydrolysierte Polyvinylalkohole sowie Polyvinylalkohol selbst.

Unter Copolymerisate von Vinylacetat werden als Verdickungsmittel insbesondere voll- oder teilverseifte Vinylalkohol-Copolymerisate verstanden, insbesondere vollverseifte Copolymere aus Alkylvinylester und Vinylacetat mit einem Anteil an Alkylvinylester von vorzugsweise 5 bis 20 Mol-%, ganz besonders Copolymere aus Alkylvinylacetat und Vinylacetat.

Weiterhin kommen als Verdickungsmittel Homo- und Copolymerisate von N-Vinylpyrrolidon in Frage, die in Wasser vollständig dispergieren.

Vorteilhafte Verdickungsmittel sind Polymerisate, welche 35 bis 100 Mol-% Anteile von Verbindungen der allgemeinen Formel

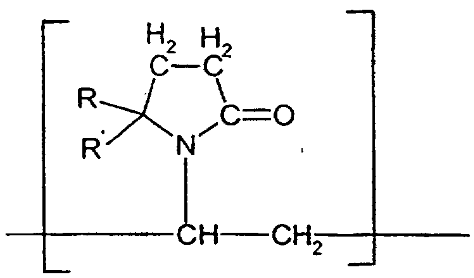

mit R, R' = unabhängig voneinander H, Methyl oder Ethyl und 0 - 65 Mol-% Anteil eines oder mehrerer monoethylenisch ungesättigter Comonomeren, insbesondere Vinylester wie Vinylacetat, Acrylsäureester wie Ethylacrylat, Methacrylsäureester wie Methylmethacrylat, Vinylalkylester wie Vinylcyclohexylether, Vinylhalogenide wie Vinylchlorid, Allylalkohol, Acrylnitril, Styrol, Vinylcarbazol und weitere mehr.

Das Molekulargewicht der Homo- und Copolymerisate von N-Vinylpyrrolidon beträgt 2 000 - 150 000, vorzugsweise weniger als 100 000 g/mol.

Ganz besonders bevorzugt sind Homopolymerisate von N-Vinylpyrrolidon sowie Copolymerisate mit Vinylestern.

Thixotropiermittel sind beispielsweise geeignet zur Einstellung des Lager- und Verarbeitungsverhaltens, wie z.B. Filmbildungs- und Verlaufseigenschaften der gewünschten Anstrich- und Beschichtungsmittel. Eine Übersicht kann beispielsweise entnommen werden aus Römpp Lexikon, Lacke und Druckfarben, Ulrich Zorll, Thieme Verlag, Stuttgart, 1998.

Beispiele geeigneter Thixotropiermitel sind Schichtsilikate, pyrogene Kieselsäuren, sowie organische Verbindungen auf Basis von z.B. hochmolekularen Polyolefinen, hydriertem Rizinusöl, Polyamiden, Cellulosederivaten oder Polyacrylaten.

Ferner kommen niedermolekulare, halbkristalline organische Verbindungen auf Harnstoffbasis sowie Acrylat-Copolymer-Mikropartikel in Frage, die in dem gewünschten Anstrich- und Beschichtungsmittel Mikrogele ausbilden.

Für geeignete Entschäumer und Schaumverhinderungsmittel bestehen keine Einschränkungen. Insbesondere kommen Produkte auf Basis natürlicher Öle oder Mineralöle, gegebenenfalls chemisch modifizierte Alkohole und chemisch modifizierte Silikone in Frage. Erfindungsgemäß kann - infolge des sehr niedrigen Energieeintrages bei der Herstellung der Anstrichmittel- oder Beschichtungsmittel - der Gehalt an Entschäumern im Vergleich zu Flüssigpräparationen stark reduziert sein oder ganz vermieden werden.

Hilfsmittel zur Enthärtung des Wassers können vorteilhaft sein sowohl bei der Herstellung der Feststoffkomponente a) als auch in den Anstrichmitteln und Beschichtungsmitteln selbst. Beispielsweise kommen mittel- bis hochmolekulare Polyphosphate (z.B. Calgon®) in Frage.

Neben den genannten Additiven kann die Feststoffkomponente a) gegebenenfalls auch weitere übliche Mittel enthalten wie pH-Regler, weitere Filmbildungs- und Verlaufshilfsmittel, Trockenstoffe (Sikkative), Hautverhütungsmittel, Antifoulingmittel, UV-Schutzmittel und Stabilisatoren, Biozide, Holzschutzmittel usw.

Bevorzugte Feststoffkomponenten a) besitzen eine Restfeuchte von weniger als 15 Gew.-%, vorzugsweise weniger als 5 Gew.-%, insbesondere weniger als 1 Gew.-%. Die Feststoffkomponente a) liegt vorzugsweise in Form ihres Pulvers, ihres kubischen, sphärischen oder kugelförmigen Granulates oder als grobteilige Pellets vor. Besonders bevorzugt sind Granulate mit einer mittleren Teilchengröße, bestimmt aus der Massenverteilung, von 20 bis 5 000 µm, vorzugsweise 50 bis 2 000 µm, insbesondere 100 bis 500 µm.

Der Gehalt an Additiven in der Feststoffkomponente a) beträgt in Summe, bezogen auf die gesamte Feststoffkomponente a), im allgemeinen 0 bis 70 Gew.-%, vorzugsweise 0,2 bis 40 Gew.-%, insbesondere 0,5 bis 20 Gew.-%.

Besonders bevorzugt enthält die Feststoffkomponente a) 30 bis 99,5 Gew.-%, insbesondere 40 bis 99 Gew.-%, an Pigmenten und Füllstoffen.

**Bindemittelkomponente b)**

Als Bindemittel der Komponente b) kommen sowohl organische als auch anorganische Verbindungen in Frage. Erfindungsgemäß besteht keine Einschränkung hinsichtlich dieser Verbindungen. Bevorzugte organische Bindemittel sind wasserlösliche, wasserdispergierbare oder wasseremulgierbare, natürliche, natürlich-modifizierte oder synthetische, im allgemeinen filmbildende Verbindungen. Synthetische Bindemittel sind z.B. Polymere auf der Grundlage von Acryl-, Vinyl-, Styrol- oder Isocyanat-Monomeren sowie deren Mischungen und Copolymerisate. Als natürlich-modifizierte Bindemittel sind insbesondere Cellulosederivate zu nennen.

Als natürliche Bindmittel seien genannt:

- Naturharze, wie z.B. Kollophonium oder Schellack
- natürliche Öle, insbesondere gesättigte oder verschiedengradig ungesättigte Fettsäuren enthaltende, gegebenenfalls oxidativ trocknende Öle, wie z.B. Leinöl, Ricinenöl, Sojaöl, Rizinusöl etc.
- Bitumen, Asphalt oder Pech.

Natürlich modifizierte Bindemittel sind insbesondere chemisch modifizierte Naturharze, z.B. Kollophonium-Maleinatharz sowie modifizierte Öle, z.B. Dicköle, isomerisierte Öle, styrolisierte- und acrylierte Öle, Cycloöle sowie Maleinat-, Urethanund faktorisierte Öle.

Weitere natürlich-modifizierte Bindemittel sind Cellulosederivate wie z.B. Cellulosenitrat, Celluloseether, Celluloseester organischer Säuren, sowie modifizierter Naturkautschuk wie z.B. Cyclo- und Chlorkautschuk.

Synthetische Bindemittel sind beispielsweise gesättigte Polyester, die durch Polyveresterung bi- oder höherfunktioneller Alkohole mit mehrfunktionellen gesättigtaliphatischen, cyclo-aliphatischen oder aromatischen Carbonsäuren bzw. deren Anhydriden erhalten werden; es kommen sowohl hydroxy- als auch carboxyfunktionelle Polyester in Frage.

Ferner seien genannt ungesättigte Polyester, die gegebenenfalls mit monomeren (Meth)Acrylaten, Allylverbindungen, anderen ungesättigten Monomeren, insbesondere Styrol, radikalisch copolymerisiert sind, sowie ungesättigte strahlungshärtende Acrylatharze wie z.B. Polyester-, Polyether-, Epoxy- und Urethan-Acrylate.

Weitere synthetische organische Bindemittel sind Alkydharze (mit Fettsäuren, fetten Ölen oder höhere synthetischen Carbonsäuren modifizierte Polyester) sowie chemisch modifizierte Alkydharze beispielsweise styrolisierte, acrylierte, urethanisierte, silikonmodifizierte, polyamidmodifizierte und harzmodifizierte Alkydharze, ferner insbesondere Wasser verdünnbare Alkydharze, z.B. auf Basis neutralisierbarer kurz- und mittelöliger, carboxysaure Alkydharze, selbstemulgierbare Alkydharze mit reduzierter Säurezahl und permanent hydrophilen Polyetherketten im Molekül, sowie mittels Tensiden emulgierbare Alkydharze.

Geeignete organische Bindeinittel sind weiterhin Acrylharze (Polyacrylate) in Form ihrer Homo- und Copolymerisate, z.B. Styrolacrylat, sowie Polyacryl-Polyole. Besonders bevorzugt sind wasserverdünnbare Acrylharze.

Als Bindemittel der Komponente b) sind vorzugsweise Kunststoffdispersionen (Polymerdispersionen) geeignet, insbesondere Emulsions(Co)polymerisate wie z.B. Styrol-Butadien-, Vinylacetat-, Reinacrylat-, und Styrol-Acrylat-Copolymerisate.

Weiterhin seien als organische Bindemittel der Komponente b) genannt:

- Phenol-, Melamin-, Benzoguanamin-, Hamstoff- und Carbamidesterharze
- Epoxidharze und -ester
- Ein- und Zweikomponenten-Polyurethansysteme
- Siliconharze

Als anorganische Bindemittel kommen beispielsweise Kalk in Form von beispielsweise Calciumhydroxid oder Kalkhydrat (Pulver), Weißzement (Pulver) sowie silikatische Verbindungen (Alkalisilikate) wie z.B. Kaliwasserglas als wäßrige Lösung von Kaliumsilikat in Frage.

Es kommen auch Mischungen von Alkalisilikaten mit Kunststoffdispersionen, z.B. Styrol-Acrylat-Copolymeren in Frage.

Die Bindemittelkomponente b) kann sowohl in fester wie auch in flüssiger Form vorliegen. Als feste Form sind beispielsweise Pulver, Granulate oder Pellets zu nennen. Als flüssige Formen kommen beispielsweise wäßrige Lösungen sowie wäßrige Dispersionen wie z.B. Emulsionen oder Suspensionen in Frage.

Die Bindemittel der Komponente b) können neben den genannten i.A. filmbildenden Bindemitteln zusätzlich weitere Additive enthalten. Als Additive kommen im weitesten Sinne die im Zusammenhang mit der Feststoffkomponente a) genannten in Frage, insbesondere aber solche, die für die Einstellung der gewünschten Anstrich- und Beschichtungsmittel üblichen Additive eingesetzt werden. Bevorzugt kommen Verdickungs- und Thixotropiermittel (wie oben ausgeführt) in Betracht sowie grenzflächenaktive Mittel zur Erzielung wäßriger Dispersionen der genannten Bindemittel. Der Gehalt an Additiven in der Komponente b) beträgt im allgemeinen 0 bis 40 Gew.-%, vorzugsweise 0 bis 10 Gew.-%, bezogen auf die gesamte Bindemittelkomponente b).

Als gegebenenfalls weitere Komponente kann eine Lösungsmittelkomponente c) Bestandteil des Anstrichmittel- bzw. Bindemittelsystems sein. Als bevorzugte Lösungsmittel sind wasserlösliche oder wassermischbare Lösungsmittel zu nennen. Das Lösungsmittel kann entweder als Co-Lösungsmittel für die Bindemittelkomponente b) oder als Hilfsmittel zur Verbesserung der Trocknungs- und Filmbildungseigenschaften der Anstrich- und Beschichtungsmittel dienen. Es kommen auch Gemische verschiedener Lösungsmittel sowie gegebenenfalls auch polymere, hochsiedende Lösungsmittel mit einem Siedepunkt von höher als 250°C in Frage. Erfindungsgemäß besteht keine Einschränkung hinsichtlich der zu verwendenden Lösungsmittel. Jedoch werden solche, die in den Anstrich- und Beschichtungsmitteln nach dem Stand der Technik eingesetzt werden, bevorzugt. Hierunter fallen insbesondere Verbindungen aus der Gruppe der aliphatischen-, cycloaliphatischen- oder aromatischen Kohlenwasserstoffe und Terpenkohlenwasserstoffe, ferner Alkohole, Glykol- und Polyglykolether, Ester und Ketone. In Frage kommen auch aminische Lösungsmittel, insbesondere solche auf Basis primärer, sekundärer und tertiärer, aliphatischer sowie aromatischer oder cycloaliphatischer Amine sowie deren Mischungen und Derivate.

Der Gehalt an gegebenenfalls in dem erfindungsgemäßen System eingebrachten Lösemittel richtet sich nach den gewünschten Verarbeitungseigenschaften und der Verwendung der Anstrich- und Beschichtungsmittel sowie nach ökologischen Gesichtspunkten für die Anwendung. Im allgemeinen sollten Lösungsmittel mit dein Beschichtungsmittel verträglich und unter den jeweiligen Filmbildebedingungen bei der Applikation flüchtig sein. Die genannten Lösemittel können auch die Aufgabe als Verdünnungsmittel oder Verschnittmittel für das Anstrich- und Beschichtungsmittel haben. Bezogen auf das genannte System beträgt der Gehalt an Lösemittel der Komponente c) vorzugsweise weniger als 55 Gew.-%, insbesondere weniger als 30 Gew.-%.

Für das erfindungsgemäße Anstrichmittel- und Beschichtungsmittelsystem werden bevorzugt alle erforderlichen Pigmente und Füllstoffe in Form einer oder mehrerer Feststoffkomponenten a) zur Verfügung gestellt. Von besonderem Vorteil ist die Bereitstellung getrennter Feststoffkomponenten a) für Füllstoffe und Pigmente. Ebenso kann eine Feststoffkomponente a) auch aus einer Mischung auf Basis Pigmente und Füllstoffe bestehen.

Bevorzugt enthält das erfindungsgemäße Anstrichmittel- und Beschichtungsmittelsystem 1 bis 95 Gew.-%, insbesondere 5 bis 70 Gew.-% mindestens einer Feststoffkomponente a) und 0,1 bis 60 Gew.-%, insbesondere 1 bis 30 Gew.-% der Bindemittelkomponente b) in fester oder flüssiger Form sowie 4,9 bis 98,9 Gew.-%, insbesondere 10 bis 80 Gew.-% Wasser und gegebenenfalls ein wasserlösliches oder wassermischbares Lösungsmittel.

In einer weiteren bevorzugten Ausführungsform enthalten die erfindungsgemäßen Anstrichmittel- und Beschichtungsmittelsysteme vorzugsweise mehr als 95 Gew.-% der Komponenten a), b) und Wasser, insbesondere mehr als 98, vorzugsweise mehr als 99 Gew.-%.

Das Einrühren der Komponenten in Wasser mit einem Energieeintrag von weniger als 150 $J/cm^3$, insbesondere weniger als 130 $J/cm^3$, besonders bevorzugt weniger als 120 $J/cm^3$ wird durch einfaches Einrühren beispielsweise per Hand oder elektrischer Hand-Rührmaschinen der Komponenten a) und b) in Wasser bereits sichergestellt.

Bevorzugt weist das erfindungsgemäße Anstrichmittel- und Beschichtungssystem nach Mischen der Komponenten in Wasser mit einem spezifischen Energieeintrag von weniger als 150 $J/cm^3$ eine Kömigkeit von weniger als 50 $\mu$m, insbesondere von weniger als 40 $\mu$m auf.

<u>**Herstellung der Feststoffkomponente a)**</u>

Besonders bevorzugt wird eine Feststoffkomponente a) eingesetzt, die dadurch erhältlich ist, daß man die anorganischen oder organischen Pigmente oder Füllstoffe in fester Form, vorzugsweise als gefinishte oder ungefinishte Pulver oder Granulate, oder als wäßrige Suspension, insbesondere als wäßriger Preßkuchen, in einem wäßrigen oder wäßrig-organischen Medium gegebenenfalls zusammen mit den genannten Additiven naßzerkleinert und anschließend trocknet.

Bevorzugt wird dabei ein wäßriges Medium verwendet, das einen pH-Wert von 2 bis 12, insbesondere von 2 bis 10 aufweist. Im allgemeinen wird eine Temperatur von 0 bis 95°C, vorzugsweise von 20 bis 60°C zur kontinuierlichen oder diskontinuierlichen Naßzerkleinerung angelegt. Unter Naßzerkleinerung wird in dem Zusammenhang Homogenisieren, Mahlen sowie auch Kneten verstanden. Dieser Verfahrensschritt überführt Pigmente u/o Füllstoffe in einen fein verteilten Zustand. Die erforderlichen Additive können gegebenenfalls vor, während oder nach der Erstellung der Feinverteilung zugesetzt werden. Die Auswahl der Verfahren zur Erzielung der gewünschten Feinverteilung vor der Trocknung richtet sich nach dem Aggregations- bzw. Agglomerationszustand der eingesetzten Feststoffe und dem erforderlichen Energieaufwand für die Erzielung der gewünschten Feinverteilung. Beispielsweise kommen für organische und anorganische Füllstoffe sowie anorganische Pigmente Verfahren wie Dissolver, Ultraturrax oder Rotor-Stator-Mühlen in Frage. Herstellungsbedingt stärker aggregierte Pigmente wie z.B. feinteilige organische Pigmente, Ruß und spezielle feinteilige anorganische Oxidpigmente können darüber hinaus Naßmahltechniken mit sehr hohem spezifischen Energieeintrag erforderlich machen. Dieser wird beispielsweise durch Rührwerkskugeln- und perlmühlen, Dispersionskneter, Walzenstuhl oder Hochdruckhomogenisatoren bereitgestellt. Die so erhaltenen Pigmente oder Füllstoffdispersionen werden gegebenenfalls anschließend mit weiterem Wasser oder wasser-organischem Medium oder gegebenenfalls weiteren genannten Additiven auf eine für die anschließende Trocknung gewünschte Zusammensetzung und Konsistenz eingestellt.

Im Anschluß daran wird vorzugsweise die wäßrige Dispersion mittels Trocknung in die gewünschte Feststoffkomponente a) überführt. Als geeignetes Verfahren für die Trocknung ist insbesondere die Sprühtrocknung, vorzugsweise Einstoffsprühtrocknung mittels Hochdruck- bzw. Drallkammerdüse oder Sprühtrocknung mittels Zerstäubungsscheiben, Gefriertrocknung und Sprühgefriertrocknung mit vor- oder nachgeschalteter Granulation oder Trockenaufarbeitung, Aufbaugranulation beispielsweise nach dem Teller- oder Trommelgranulationsverfahren gegebenenfalls mit teilweise vorgetrocknetem Produkt, Wirbelschichttrocknung und -granulation, Mischeragglomeration und -trocknung gegebenenfalls in Kombination mit Wirbelschicht- bzw. Fließbetttrocknung. Ferner kommen Verfahren wie Mischagglomeration in Suspension mit gegebenenfalls nachgeschalteter Wirbelschicht- oder Fließbetttrocknung, Granulation mittels Pastenverformung und nachgeschalteter Nachtrocknung und Zerkleinerung oder Pelletierung sowie Dampfstrahlagglomeration in Frage. Kombinationen der genannten Verfahren sind ebenfalls möglich. Besonders bevorzugt wird als Trocknungsverfahren Sprühtrocknung oder Wirbelschichttrocknung und -Granulation eingesetzt.

Durch das erfindungsgemäße System ist es erstmals möglich alle gewünschten koloristischen und applikationstechnischen Eigenschaften von wäßrigen pigmentierten Anstrich- und Beschichtungsmitteln ausschließlich ausgehend von in wäßrigen Systemen sehr gut redispergierbaren Pigmenten und Füllstoffen in Form ihrer Feststoffkomponente a) zu erzielen. Nach dem System hergestellte Anstrich- und Beschichtungsmittel besitzen die eingangs genannten Vorteile gegenüber herkömmlichen Flüssigpräparationen. Hervorzuheben sind insbesondere die weitgehend unbegrenzte Flexibilität der Anwendung sowie die ökologischen Vorteile durch den Wegfall flüssiger Präparationen im Handel bis unmittelbar vor der Applikation.

Das erfindungsgemäße Anstrichmittel und Beschichtungsmittelsyste eignet sich besonders zur Herstellung von wäßrigen Anstrichmitteln und Beschichtungsmitteln, insbesondere Dispersions- und Lackfarben, Metallfarben und -grundierungen, Automobillackfarben, Holzschutzfarben und Lasuren sowie zur Herstellung von wäßrigen Papierstreichfarben und Tapetenfarben, von wäßrigen Lederzurichtungsfarben sowie von wäßrigen Druckfarben für Papier für Nonwoven und Textilien.

**Beispiele:**

Vergleichsbeispiel 1: industrielle marktübliche hochgefüllte Innenwandfarbe weiß

Nach der in "Farbe & Lack 104 ,7/98" veröffentlichten Methode und ähnlicher Rezeptur wurden 200 g der hochgefüllten Innenwandfarbe an einem Labordissolver mit einem Scheibendurchmesser von 50 mm in einem 500 ml Becher mit einem Durchmesser von 70 hergestellt, wobei folgende Rezepturbestandteile unter Rühren eingebracht wurden (Angabe in Gew.%):

| | |
|---|---|
| Wasser | 27,0% |
| Calgon® N (10%ig in Wasser) | 0,2% |
| Borchigel® L76<br>(PU-Verdicker der Fa. Borchers GmbH,Monheim) | 0,2% |
| Nopco® 8034 E<br>(Entschäumer der Fa. Occidental Electrochemicals Corp.,Irving ,USA) | 0,1% |

(fortgesetzt)

| | |
|---|---|
| Walocel® XM 30000 PV<br>(Celluloseether der Fa. Wolff Walsrode AG ,Walsrode ) | 0,4 % |
| NaOH (25%ig) | 0,1 % |
| Borchigen® NA40<br>(Netzmittel der Fa. Borchers GmbH,Monheim) | 0,5 % |
| Dowanol® DPnB<br>(Co-Lösungsmittel der Dow Chemical Company ,Delaware ,USA) | 0,5 % |
| Preventol® D 7<br>(Biozid der Fa. Bayer AG, Leverkusen) | 0,2 % |
| Bayertitan® RKB 2<br>(Titandioxid Pigment der Bayer AG, Leverkusen) | 5,7 % |
| Socal® P2<br>(feinteiliges Calziumcarbonat der Solvay Alkali GmbH, Rheinberg) | 8,0 % |
| Finntalk® M30<br>(Talkum der Fa. Plüss-Staufer AG,Oftringen,CH) | 9,1 % |
| Omyalite® 90<br>(Kreide der Fa. Omya GmbH,Köln) | 12,5 % |
| Omyalite® 5 GU<br>Calziumcarbonat der Fa. Omya, Köln) | 29,7 % |

Anschließend wurde 14 min mit einer Drehzahl von 3500 $min^{-1}$ (Umfangsgeschwindigkeit ca. 9 m/s) mit dem Dissolver dispergiert wobei an der Maschine eine Leistungsaufnahme von 70 W gemessen wurde.
Der spezifische Energieeintrag bezogen auf das Volumen von 125 $cm^3$ (Dichte ca. 1,6 $g/cm^3$) ergibt sich daraus zu 470 J/ $cm^3$.
Anschließend wurden unter Rühren

| | |
|---|---|
| Dispersion® KDA 524n 50 %ig<br>(Styrolacrylat-Dispersion der Fa. Freihoff ) | ca. 6,0 % |

zugesetzt und weitere 2 min bei einer Drehzahl von 500 $min^{-1}$ (Umfangsgeschwindigkeit ca. 1 m/s) mit dem Dissolver dispergiert wobei an der Maschine ein Leistungsaufnahme von 31 W gemessen wurde.
Der spezifische Energieeintrag bezogen auf das Volumen von ca. 136 $cm^3$ (Dichte ca. 1,6 $g/cm^3$) ergibt daraus zu 27 J/ $cm^3$.
Zur Herstellung der Weißpaste war also insgesamt ein spezifischer Energieeintrag von 497 J/ $cm^3$ erforderlich.
Das erhaltene Anstrichmittel besaß eine Körnigkeit von weniger als 40 $\mu$m.
Die so erhaltene Paste wurde vor weiteren Prüfungen einer Reifezeit von 12 Stunden unterzogen.

Vergleichsbeispiel 2 : industrielle marktübliche wäßrige Abtönfarbe violett

Nach dem Verfahren wie in Beispiel 1 der veröffentlichten Patentanmeldung EP-A 735 109 beschrieben wurden 500 g einer wäßrigen Pigmentpräparation auf Basis des organischen Farbpigmentes C.I. Pigment Violet 23 mit folgender Zusammensetzung (Gew.%):

| | |
|---|---|
| C.I. Pigment Violett 23<br>(Sandorinviolett® BL ,Clariant) | 25 % |
| Oxalkylierungsprodukt der Komp.b) aus DE-A-195 11 624, Bsp. 1 | 15 % |
| Polyethylenglykol P 400 | 12 % |
| Proxel® GXL 20%ig | 0,2 % |
| Wasser | 47,8 % |

Der spezifische Energieeintrag zur Herstellung mit einer mittleren Teilchengröße von < 0,5 $\mu$m wurde rechnerisch zu mehr als 4000 J/$cm^3$ ermittelt (siehe auch Schwedes, Feinmahl- und Klassiertechnik, Reprints, GVC-Dezembertagung 1993, Köln, Herausgeber GVC-VDI Gesellschaft für Verfahrenstechnik und Chemieingenieurwesen). Aufgrund der hohen Feinheit war eine Körnigkeit des Produktes nicht meßbar.

**Beispiel 1:** Feststoff der Komp. a) für die Herstellung einer weißen hochgefüllten Innenwandfarbe nach dem erfindungsgemäßen System

Mit dem in Vergleichsbeispiel 1 angegebenen Verfahren jedoch ohne Zusatz des Co-Lösemittels und der Styrolacrylat-Dispersion wurde eine weiße Dispersion hergestellt in einer Menge von 2 kg und anschließend mittels eines Laborsprühtrockners (Zweistofftrockner) mit einer Eintrittstemperatur von 170°C und einer Austrittstemperatur von 70°C zu einem staubarmen Pulver mit einer Restfeuchte von 0,39 Gew.-% getrocknet.

Die Zusammensetzung des Feststoffes (ca. Gew. %) ergab sich zu :

| | |
|---|---|
| Restfeuchte | 0,39 % |
| Calgon® N | 0,03 % |
| Borchigel® L76 | 0,3 % |
| Nopco® 8034 E | 0,14 % |
| Walocel® XM 30000 PV | 0,45% |
| Natriumhydroxid | 0,1 % |
| Borchigen® NA40 | 0,75 % |
| Preventol® D 7 | 0,3 % |
| Bayertitan® RKB 2 | 8,6 % |
| Socal® P2 | 12,1 % |
| Finntalk® M30 | 13,6 % |
| Omyalite® 90 | 18,7 % |
| Omyalite® 5 GU | 44,6 % |

**Beispiel 2:** Herstellung einer weißen hochgefüllten Innenwandfarbe nach dem erfindungsgemäßen System

An einem Labordissolver mit einem Scheibendurchmesser von 50 mm in einem 500 ml Becher mit einem Durchmesser von 70 mm wurden 200 g der weißen Innenwandfarbe hergestellt ,wobei folgende Rezepturbestandteile unter Rühren eingebracht wurden (Angabe in Gew.%):

| | |
|---|---|
| Wasser | 27,0 % |
| Dowanol® DPnB | 0,5 % |
| Dispersion® KDA 524n 50 %ig<br>*(Komp. b) des erfindungsgemäßen Systems, siehe Vergleichsbeispiel 1)* | 6,0 % |
| Feststoff aus Beispiel 1<br>*(Komp. a) des erfindungsgemäßen Systems)* | 66,5 % |

Anschließend wurde 5 min mit einer Drehzahl von 500 $min^{-1}$ (Umfangsgeschwindigkeit ca. 1 m/s) mit dem Dissolver dispergiert wobei an der Maschine ein Leistungsaufnahme von 30 W gemessen wurde.

Der spezifische Energieeintrag bezogen auf das Volumen von 125 $cm^3$ (Dichte ca. 1,6 $g/cm^3$) ergibt daraus zu 72 J/ $cm^3$.

Die so erstellte Paste zeigte gegenüber dem Vergleichsbeispiel 1 keine Viskositätsunterschiede und konnte unmittelbar nach der Herstellung verwendet werden.
Die Körnigkeit betrug weniger als 40 µm.
Die koloristische Prüfung erfolgte im Vergleich zu dem Vergleichsbeispiel 1 mittels Aufstrich auf Rakelkarton mit 100 µm Rakel. In beiden Fällen ergaben sich stippenfreie, einwandfreie Aufstriche gleicher Deckkraft und Weißgrades. Auch hinsichtlich der Verlaufs- und Ablaufeigenschaften bestanden keine Unterschiede.

Eine weitere koloristische Prüfung erfolgte, indem 3 Teile der Violetten Farbpaste gemäß Vergleichsbeispiel 2 von Hand 2 min mittels Gummiwischer in 97 Teile der Weißfarbe nach dem erfindungsgemäßen System eingerührt wurden und anschließend farbmetrisch gegen die gleichermaßen getönte Weißfarbe nach Vergleichsbeispiel 1 mittels Cielab System vermessen wurde. Die ermittelte Farbstärke betrug 99,5 % ,die Gesamtfarbabweichung dE 0,2.

**Beispiel 3:** Herstellung einer violett getönten wäßrigen Innenwandfarbe nach dem erfindungsgemäßen System

Nach dem Verfahren wie in Beispiel 1 der DE-A-195 11 624 beschrieben wurden 1200 g einer wäßrigen Pigmentpräparation auf Basis des organischen Farbpigmentes C.I. Pigment Violet 23 mit folgender Zusammensetzung

(Gew.%):

| | |
|---|---|
| C.I. Pigment Violet 23 (Sandorinviolett® BL ,Clariant) | 27 % |
| Dispergiermittel auf Basis oxalkyliertes Rizinusöl | 13 % |
| Verdickungsmittel 10%ig (Mowiol® 4-88 ,Hoechst AG) | 43 % |
| Wasser | 17 % |

Der spezifische Energieeintrag zur Herstellung mit einer mittleren Teilchengröße von < 0,5 µm wurde rechnerisch zu mehr als 4000 J/cm$^3$ ermittelt.

Die so erhaltene Slurry (Dispersion) wurde anschließend mittels eines Laborsprühtrockners (Zweistofftrockner) mit einer Eintrittstemperatur von 170°C und einer Austrittstemperatur von 70°C zu einem staubarmen Pulver mit einer Restfeuchte von 1,5 Gew.% getrocknet.

Die Zusammensetzung des violetten Feststoffes (ca. Gew. %) ergab sich zu :

| | |
|---|---|
| C.I. Pigment Violett 23 | 60 % |
| Dispergiermittel | 28,9 % |
| Verdickungsmittel | 9,6 % |
| Restfeuchte | 1,5 % |

An einem Labordissolver mit einem Scheibendurchmesser von 50 mm in einem 500 ml Becher mit einem Durchmesser von 70 mm wurden 200 g der violett abgetönten Innenwandfarbe hergestellt, wobei folgende Rezepturbestandteile unter Rühren eingebracht wurden (Angabe in Gew.%):

| | |
|---|---|
| Wasser | 25,0 % |
| Dowanal® DPnB | 0,5 % |
| Dispersion® KDA 524n 50 %ig<br>*(Komp. b) des erfindungsgemäßen Systems, siehe Vergleichsbeispiel 1)* | 6,0 % |
| Feststoff aus Beispiel 1<br>*(Komp. a) des erfindungsgemäßen Systems)* | 68,3 % |
| violetter Feststoff<br>*(Komp. a) des erfindungsgemäßen Systems* | 0,2 % |

Anschließend wurden 5 min mit einer Drehzahl von 500 min$^{-1}$ (Umfangsgeschwindigkeit ca. 1 m/s) mit dem Dissolver dispergiert, wobei an der Maschine ein Leistungsaufnahme von 31 W gemessen wurde.

Der spezifische Energieeintrag bezogen auf das Volumen von ca. 125 cm$^3$ (Dichte ca. 1,6 g/cm$^3$) ergibt daraus zu 74 J/ cm$^3$.

Die so erstellte Paste zeigte bei der Applikation mittels Rakel einen streifen- und stippenfreien Aufstrich, dessen Farbstärke auch nach weiteren 2min Rühren am Schnellrührer nur noch unwesentlich zunahm. Die Körnigkeit betrug weniger als 40 µm.

Im Vergleich zu der reinen Weißfarbe nach Beispiel 2 zeigte die violett getönte Farbe nur eine geringfügig erhöhteViskosität jedoch vergleichbares Verlaufs-,Ablauf- und Trocknungsverhalten.

Nachteile in der Scheuer- und Wischbeständigkeiten wurden nicht beobachtet.

Gleich gute Ergebnisse wurden auch erhalten , nachdem beide Feststoffe der Komp. a) dieses Beispiels vor dem Eintrag in das System homogen trocken gemischt wurden.

__Beispiel 4:__

Herstellung einer roten getönten wäßrigen Innenwandfarbe nach dem erfindungsgemäßen System

An einem Labordissolver 1200 g einer gelben Dispersion in folgender Zusammensetzung (Gew.%) angesetzt:

| | |
|---|---|
| Bayferrox ®Rot 130 M (anorganisches Pigment C.I. Pigment Red 101, Bayer AG) | 57 % |

(fortgesetzt)

| | |
|---|---|
| Dispergiermittel auf Basis oxalkyliertes Rizinusöl | 4,4 % |
| Dispergiermittel auf Basis modif. Phosphatesters | 14,7 % |
| Verdickungsmittel 10%ig (Mowiol® 4-88, Hoechst AG) Wasser | 23,2 % |

Die Dispergierung erfolgte mit eine Scheibe von 50 mm Durchmesser bei einer Drehzahl von 3500 $min^{-1}$ über einen Zeitraum von 20 min. Der spezifische Energieeintrag wurde mit 136 $J/cm^3$ errechnet.

Die so erhaltene Slurry (Dispersion) wurde anschließend mittels eines Laborsprühtrockners (Zweistofftrockner) mit einer Eintrittstemperatur von 170°C und einer Austrittstemperatur von 70°C zu einem staubarmen Pulver mit einer Restfeuchte von 0,3 Gew.% getrocknet.

Die Zusammensetzung des roten Feststoffes (ca. Gew. %) ergab sich zu :

| | |
|---|---|
| C.I. Pigment Rot 101 | 87,8 % |
| Gesamt-Dispergiermittel | 7,85 % |
| Verdickungsmittel | 4,05 % |
| Restfeuchte | 0,3 % |

An einem Labordissolver mit einem Scheibendurchmesser von 50 mm in einem 500 ml Becher mit einem Durchmesser von 70 mm wurden 200 g der rot abgetönten Innenwandfarbe hergestellt, wobei folgende Rezepturbestandteile unter Rühren eingebracht wurden (Angabe in Gew.%):

| | |
|---|---|
| Wasser | 25,5 % |
| Dowanol® DPnB | 0,5 % |
| Dispersion® KDA 524n 50 %ig<br>*(Komp. b) des erfindungsgemäßen Systems, siehe Vergleichsbeispiel 1)* | 6,0 % |
| Feststoff aus Beispiel 1<br>*(Komp. a) des erfindungsgemäßen Systems)* | 63,0 % |
| roter Feststoff von oben<br>*(Komp. a) des erfindungsgemäßen Systems* | 5,0 % |

Anschließend wurde 5 min mit einer Drehzahl von 500 $min^{-1}$ (Umfangsgeschwindigkeit ca. 1 m/s) mit dem Dissolver dispergiert wobei an der Maschine ein Leistungsaufnahme von 28 W gemessen wurde.

Der spezifische Energieeintrag bezogen auf das Volumen von ca. 125 $cm^3$ (Dichte ca. 1,6 $g/cm^3$) ergibt daraus zu 67 J/ $cm^3$.

Die so erstellte Paste zeigte bei der Applikation mittels Rakel einen sehr farbstarken streifen- und stippenfreien Aufstrich, dessen Farbstärke auch nach weiteren 2 min Rühren am Schnellrührer nicht zunahm. Die Körnigkeit betrug weniger als 40 µm.

Im Vergleich zu der reinen Weißfarbe nach Beispiel 2 zeigte die rot getönte Farbe eine leicht erhöhte Viskosität, jedoch keine prinzipiellen nachteiligen applikationstechnischen Eigenschaften.

Gleich gute Ergebnisse wurden auch erhalten, nachdem beide Feststoffe der Komp. a) dieses Beispiels vor dem Eintrag in das System homogen trocken gemischt wurden.

## Patentansprüche

**1.** Anstrichmittel- und Beschichtungsmittelsystem, enthaltend

a) wenigstens eine Feststoffkomponente, enthaltend wenigstens ein anorganisches oder organisches Weiß-, Schwarz- oder Buntpigment, anorganische oder organische Füllstoffe oder Mischungen davon und

b) wenigstens eine Bindemittelkomponente,

**dadurch gekennzeichnet, daß** die Komponenten des Systems in Wasser mit einem Energieeintrag von weniger als 150 $J/cm^3$, bezogen auf die Summe der Volumina der Komponenten und Wasser, eine wäßrige Dispersion mit einer Körnigkeit von <60 µm ergeben (bestimmt nach ISO 1524: 1983).

**2.** Anstrich- und Beschichtungsmittelsystem gemäß Anspruch 1, **dadurch gekennzeichnet, daß** die Feststoffkomponente a) 30-99,5 Gew.-% an Pigmenten und/oder Füllstoffen und weniger als 15 Gew.-% Restfeuchte enthält, jeweils bezogen auf die Feststoffkomponente.

**3.** Anstrich- und Beschichtungsmittelsystem gemäß Anspruch 1, **dadurch gekennzeichnet, daß** die Feststoffkomponente a) als Granulat mit einer mittleren Teilchengröße, bestimmt aus der Massenverteilung, von 20-5000 µm, vorzugsweise von 50-2000 µm, insbesondere von 100-500 µm eingesetzt wird.

**4.** Anstrich- und Beschichtungsmittelsysteme gemäß Anspruch 1, enthaltend

| | |
|---|---|
| 1 bis 95 Gew.-% | Feststoffkomponente a) |
| 0,1 bis 60 Gew.-% | Bindemittelkomponente b) in fester oder flüssiger Form und |
| 4,9 bis 98,9 Gew.-% | Wasser, jeweils bezogen auf das Anstrich- und Beschichtungsmittelsystem. |

**5.** Anstrichmittel- und Beschichtungsmittel gemäß Anspruch 1, **dadurch gekennzeichnet, daß** zusätzlich als Komponente c) ein wasserlösliches oder ein in Wasser mischbares organisches Lösungsmittel eingesetzt wird.

**6.** Anstrichmittel- und Beschichtungsmittelsysteme gemäß Anspruch 1, **dadurch gekennzeichnet, daß** die eingesetzte Feststoffkomponente a) dadurch erhältlich ist, daß man die Pigmente und/oder Füllstoffe in ihrer festen Form oder als wäßrige Suspension in einem wäßrigen oder wäßrig-organischen Medium gegebenenfalls in Gegenwart von Additiven gegebenenfalls naßzerkleinert und anschließend trocknet.

**7.** Anstrich- und Beschichtungsmittelsysteme gemäß Anspruch 6, **dadurch gekennzeichnet, daß** die eingesetzte Feststoffkomponente a) durch Sprühtrocknung, insbesondere mittels Einstoff- oder Zweistoffsprühtrockner erhalten wird.

**8.** Anstrich- und Beschiehtungsmittelsysteme gemäß Anspruch 6, **dadurch gekennzeichnet, daß** die eingesetzte Feststoffkomponente a) durch Gefriertrocknung erhalten wird.

**9.** Verwendung des Anstrichmittel- und Beschichtungsmittelsystems gemäß Anspruch 1 zur Herstellung von wäßrigen Anstrichmitteln und Beschichtungsmitteln, insbesondere Dispersions- und Lackfarben, Metallfarben und -grundierungen, Automobillackfarben, Holzschutzfarben und Lasuren sowie zur Herstellung von wäßrigen Papierstreichfarben und Tapetenfarben, von wäßrigen Lederzurichtungsfarben sowie von wäßrigen Druckfarben für Papier für Nonwoven und Textilien.

## Claims

**1.** Paint and coating material system comprising

a) at least one solids component comprising at least one organic or inorganic white, black or chromatic pigment, organic or inorganic fillers, or mixtures thereof, and

b) at least one binder component,

**characterized in that** the components of the system in water, with a specific energy input of less than 150 $J/cm^3$, based on the sum of the volumes of the components and water, produced an aqueous dispersion having a particle size of <60 µm (determined in accordance with ISO 1524: 1983).

**2.** Paint and coating material system according to Claim 1, **characterized in that** the solids component a) contains 30-99.5% by weight of pigments and/or fillers and less than 15% by weight residual moisture, based in each case on the solids component.

**3.** Paint and coating material system according to Claim 1, **characterized in that** the solid component a) is used as granules having an average particle size, determined from the mass distribution, of 20 - 5000 µm, preferably of 50 - 2000 µm, in particular of 100 - 500 µm.

4. Paint and coating material system according to Claim 1, comprising

| | |
|---|---|
| from 1 to 95% by weight | of solids component a) |
| from 0.1 to 60% by weight | of binder component b) in solid or liquid form and |
| from 4.9 to 98.9% by weight | of water, based in each case on the paint and coating material system. |

5. Paint and coating material system according to Claim 1, **characterized in that** additionally, as component c), a water-soluble or water-miscible organic solvent is used.

6. Paint and coating material system according to Claim 1, **characterized in that** the solids component a) employed is obtainable by subjecting the pigments and/or fillers in their solid form or as an aqueous suspension to optional wet comminution in an aqueous or aqueous-organic medium in the presence, if desired, of additives, and then drying them.

7. Paint and coating material system according to Claim 6, **characterized in that** the solids component a) used is obtained by spray drying, in particular by means of single-fluid or two-fluid spray dryers.

8. Paint and coating material system according to Claim 6, **characterized in that** the solids component a) used is obtained by freeze drying.

9. Use of the paint and coating material system according to Claim 1 for preparing aqueous paints and coating materials, especially emulsion paints and lacquer paints, metal paints and metal primers, automotive paints, wood preservative paints and stains, and also for producing aqueous coloured paper coating slips and wallpaper colours, aqueous leather dressing colours, and aqueous printing inks for paper, and for nonwovens and textiles.

## Revendications

1. Système d'agents de peinture et d'agents de revêtement contenant

    a) au moins un composant solide contenant au moins un pigment blanc, noir ou coloré inorganique ou organique, des charges inorganiques ou organiques ou des mélanges de ceux-ci et
    b) au moins un composant liant,

    **caractérisé en ce que** les composants du système donnent dans l'eau avec un apport d'énergie spécifique inférieur à 150 J/cm$^3$, par rapport à la somme des volumes des composants et de l'eau, une dispersion aqueuse ayant une granulométrie < 60 μm, de préférence inférieure à 40 μm (déterminée selon ISO 1524:1983).

2. Système d'agents de peinture et d'agents de revêtement selon la revendication 1, **caractérisé en ce que** le composant solide a) contient 30-99,5 % en masse de pigments et/ou de charges et moins de 15 % en masse d'humidité résiduelle, dans chaque cas par rapport au composant solide.

3. Système d'agents de peinture et d'agents de revêtement selon la revendication 1, **caractérisé en ce que** le composant solide a) est utilisé sous forme de granulés ayant une taille de particules moyenne, déterminée d'après la répartition massique, de 20-5 000 μm, de préférence de 50-2 000 μm, en particulier de 100-500 μm.

4. Système d'agents de peinture et d'agents de revêtement selon la revendication 1, contenant
    1 à 95 % en masse de composant solide a)
    0,1 à 60 % en masse de composant liant b) sous forme solide ou liquide
    et
    4,9 à 98,9 % en masse d'eau, dans chaque cas par rapport au système d'agents de peinture et d'agents de revêtement.

5. Agents de peinture et agents de revêtement selon la revendication 1, **caractérisés en ce que** l'on utilise en outre comme composant c) un solvant organique soluble dans l'eau ou un solvant organique miscible à l'eau.

6. Système d'agents de peinture et d'agents de revêtement selon la revendication 1, **caractérisé en ce que** l'on peut

obtenir le composant solide a) utilisé **en ce que** l'on fractionne éventuellement à l'état humide puis sèche les pigments et/ou charges sous leur forme solide ou sous forme d'une suspension aqueuse dans un milieu aqueux ou aqueux-organique, éventuellement en présence d'additifs.

**7.** Système d'agents de peinture et d'agents de revêtement selon la revendication 6, **caractérisé en ce que** l'on obtient le composant solide a) utilisé par séchage par pulvérisation, en particulier au moyen d'un sécheur à pulvérisation à une substance ou à deux substances.

**8.** Système d'agents de peinture et d'agents de revêtement selon la revendication 6, **caractérisé en ce que** l'on obtient le composant solide a) utilisé par lyophilisation.

**9.** Utilisation du système d'agents de peinture et d'agents de revêtement selon la revendication 1 pour la production d'agents de peinture et d'agents de revêtement aqueux, en particulier de peintures de type dispersion et de peintures laquées, de peintures et d'apprêts pour métaux, de peintures laquées pour véhicules automobiles, de peintures pour la protection du bois et de lasures ainsi que pour la production de peintures aqueuses pour l'enduction du papier et de peintures pour papier-tenture, de peintures aqueuses pour le corroyage du cuir ainsi que d'encres aqueuses pour le papier, pour les non-tissés et les textiles